Europäisches Patentamt

European Patent Office

Office européen des brevets

(11) Publication number: 0 352 112
A2

# EUROPEAN PATENT APPLICATION

(21) Application number: 89307372.6

(22) Date of filing: 20.07.89

(51) Int. Cl.5: B 62 D 35/00

(30) Priority: 21.07.88 ZA 884702

(43) Date of publication of application:
24.01.90 Bulletin 90/04

(84) Designated Contracting States:
AT BE CH DE ES FR GB GR IT LI LU NL SE

(71) Applicant: Klomfass, Roy Desmond
14 Eastwood Palliser Road
Eastleigh Edenvale 1610 (ZA)

Laursen, Jorn
312 Murray Street Brooklyn
Pretoria Transvaal 0181 (ZA)

(72) Inventor: Klomfass, Roy Desmond
14 Eastwood Palliser Road
Eastleigh Edenvale 1610 (ZA)

Laursen, Jorn
312 Murray Street Brooklyn
Pretoria Transvaal 0181 (ZA)

(74) Representative: Barlow, Roy James et al
J.A.KEMP & CO. 14, South Square Gray's Inn
London WC1R 5EU (GB)

(54) Air deflector for mobile vehicles and the like.

(57) The invention is concerned with air deflectors (1) for vehicles which, in use, serve to decrease the resistance to movement of the vehicle through the air and, in particular, with air deflectors of the self-inflatable type and made of flexible, substantially air impervious sheet material shaped to provide, in the operative condition, a forwardly located air inlet communicating, through a substantially dome-shaped region, with a skirt (11) portion operatively rearwardly located. The air deflectors have means (4, 5, 6, 7) for holding the air inlet (3) forwardly of the front (9) of a vehicle, in use; with an operatively rear part of said skirt portion (11) being adapted to be located over a front region of the roof and sidewalls of a vehicle to which the deflector is fitted said part of the skirt region having a peripheral tension resisting, optionally integral, strap formation (12) for holding said part of the skirt in position on a roof and side wall section of a vehicle.

FIG.1

**Description**

## AIR DEFLECTOR FOR MOBILE VEHICLES AND THE LIKE

FIELD OF THE INVENTION

This invention relates to air deflectors for use on mobile vehicles for the purpose of reducing the resistance offered by the air to the passage of the frontal face of such a vehicle therethrough. Still more particularly the invention relates to air deflectors of the general nature described in our European Patent Application No. 863072385 dated September 19, 1986 and entitled "Self-Inflatable Air Deflector".

For the purposes of this specification the term "vehicle" is intended to include self-propelled vehicles, towed road vehicles in particular caravans, rail vehicles as well as transport containers on such vehicles or on ships or on other forms of conveyance.

BACKGROUND TO THE INVENTION

Our said earlier European Patent Application describes a self-inflatable air deflector wherein a shaped flexible sheet material, adapted to form a roughly domed, forwardly projecting configuration in the inflated and operative condition, has an air inlet located forwardly of the front face of a vehicle. This inlet is defined around an air inlet frame wherein the frame is carried on a forwardly projecting arm supported in relation to the vehicle at its opposite end.

Whilst the embodiments described in our said earlier patent application operate effectively, they do lead to the disadvantage that a different shape or size of deflector has to be made for each different vehicle, at least in many cases. This is particularly so where the air deflector is to be used on the frontal face of a caravan. Whilst the width of caravans is substantially standard, their height and inclination of the forward face vary fairly widely. Furthermore, a channel-shaped formation for receiving a caulking or beading strip is not provided on many caravans.

It is one object of this invention to provide a self-inflatable air deflector of the general type under consideration wherein it can be made to be adjustable so as to fit a plurality of different sizes and shapes of vehicles.

It is a further object of this invention to provide an air deflector of the general nature under consideration which can be more easily fitted to a vehicle than at least some prior similar deflectors.

It is to be understood that the term "roof" as used in this specification includes the upper portion of the frontal wall of a vehicle where the roof and frontal wall merge through a curved region.

SUMMARY OF THE INVENTION

In accordance with this invention there is provided a self-inflating type of air deflector comprising a deflector member made of flexible, substantially air impervious sheet material shaped to provide, in the operative condition, a forwardly located air inlet communicating, through a substantially dome-shaped region, with a skirt portion operatively rearwardly located, and means for holding the air inlet forwardly of the front of a vehicle, in use; the deflector being characterised in that an operatively rear part of said skirt portion is adapted to be located over a part of the roof and sidewalls of a vehicle to which the deflector is fitted, said part of the skirt region having an optionally integral peripheral tension resisting strap formation for holding said part of the skirt in position on a roof and sidewall section of a vehicle.

Further features of the invention provide for the peripheral region of said part of the skirt portion to have a plurality of anchor loops or straps for securing said skirt portion to a vehicle at the opposite lateral extremities of the roof or upper sidewall thereof, for the strap formation to extend down the entire part of the skirt portion adapted to co-operate with the sidewalls of a vehicle and to terminate in an extension defining a tension strap for securing to a bracket in a lower region of a vehicle; for one or more bottom panels forming the bottom part of the deflector to be releasably attached to co-operating edges of adjacent sidewall portions of the deflector; and for removable gussets to be provided for insertion between the edges of the bottom panel and co-operating sidewall sections of the deflector.

The peripheral tension resisting strap formation may be a separately manufactured strap, stitched or otherwise secured to the flexible sheet material. Alternatively, where the flexible sheet material is sufficiently strong the strap formation may be constituted by an edge region, generally formed to a doubled over seam, of the flexible, air impervious sheet material itself thereby forming an integral strap formation. In the latter case, any extensions can be of separately manufactured strap material stitched to the flexible sheet material of the deflector.

The removable attachment of a bottom panel to side portions of the deflector may be achieved through the medium of "loop and pile" type of fasteners optionally in conjunction with a series of spaced co-operating eyelets for receiving a bolt and wing nut or like rigid fastener. Alternatively, the edges of panels to be joined may be provided with rope or the like located in a seam in which case a plurality of slotted, tubular, connectors may be used to hold the two rope containing seams together along a required length of such seams.

Preferably, a rearwardly extending securing strap is provided in the region adapted to co-operate with the roof of a vehicle towards or just over each side edge thereof. These straps may have buckles for securing them to anchorage points on the vehicle.

The means for holding the air inlet (which is generally defined by a rigid endless frame) in a forwardly extending condition can conveniently be an arm carried by a cross-bar securely attached to the portion of the strap formation which is adapted to co-operate with the roof of a vehicle in use. This attachment can be effected in a variety of different ways such as by means of a rope sewn onto a seam associated with, or forming the straps formation in which case the cross-bar is a slotted tube slipped axially over the enclosed rope or the like.

Whilst not being confined in any way in application, the air deflector defined above is most appropriately used on caravans which have differently inclined frontal faces as well as different heights and somewhat different widths.

In order that the invention be more fully understood, one embodiment thereof will now be described with reference to the accompanying drawings.

## BRIEF DESCRIPTION OF THE DRAWINGS

In the drawings :-

FIG. 1 is a front perspective view of a caravan fitted with an air deflector according to this invention;

FIG. 2 is a top isometric view of the air deflector alone;

FIG. 3 is a schematic, predominantly sectioned, side view of the air deflector operatively installed on a caravan;

FIG. 4a is a detailed cross-section taken along line IV - IV in Fig. 1;

FIG. 4b is a similar detailed cross-section showing an alternative arrangement to that of Fig. 4a;

FIG. 5a is a cross-section taken along line V - V in Fig. 1;

FIG. 5b is an oblique cross-section showing an alternative arrangement to that shown in Fig. 5a;

FIG. 6 is an underneath isometric view illustrating the construction of a bottom panel to the air deflector and an optional additional gusset for use in combination therewith;

FIG. 7 is a schematic view from the rear end of a caravan showing the configuration adopted by the sides of the peripheral skirt of the deflector in use; and,

FIG. 8 is a detail of an alternative means for securing the edges of the flexible sheet material together at the bottom part of the deflector.

## DETAILED DESCRIPTION WITH REFERENCE TO THE DRAWINGS

In the embodiment of the invention illustrated, an air deflector, generally indicated by numeral 1, is made of flexible, optionally fibre reinforced sheet material which is conveniently a fabric reinforced plastics material.

The sheet material is cut and joined, conveniently, by stitching and/or adhesives, to form a predominantly dome-shaped air deflector in the operative condition with the dome being directed forwardly in use. The arrangement is, in basic concept, substantially as described in our said earlier European Patent Application and such that the flow of air resulting from forward movement of a vehicle carrying same serves to "inflate" the deflector to its described condition.

This being so, the forward end 2 of the air deflector has an air inlet 3 of horizontally orientated oval shape and defined by a rigid frame 4 stitched into a seam of the flexible sheet material. Alternatively, a rope or other flexible elongate bead may be stitched into the seam with the resulting composite bead being held in position relative to the rigid frame 4.

The air inlet frame 4 is carried on the forward end of a downwardly inclined, forwardly extending arm 5 which is adjustable in length, and to this end is of telescopically extensible construction. The arm has at its rear end a transverse Tee-bar 6.

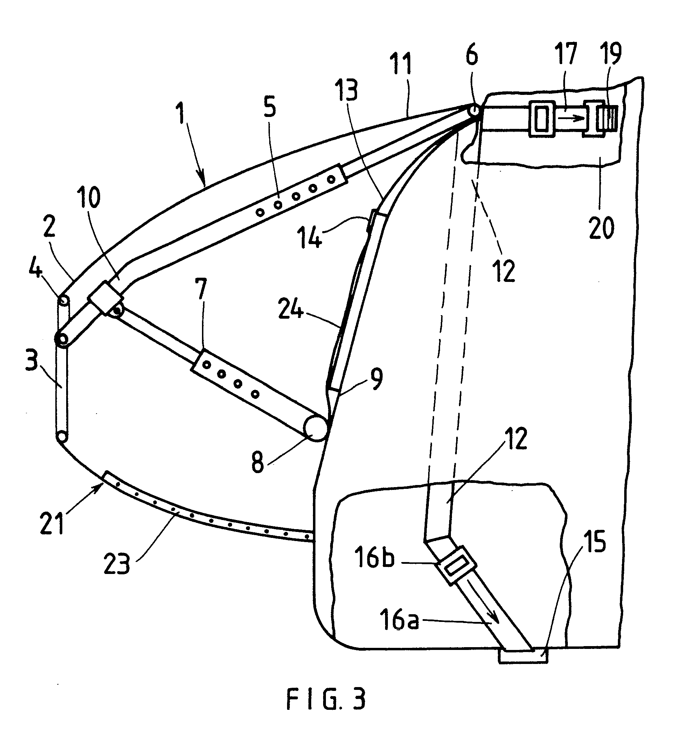

The angle at which the forwardly extending arm 5 is suported is determined by a telescopically extensible stay 7 which also has a cross-bar 8 at its rearward end for engaging the front wall 9 of a caravan in use, and which is attached to the arm 5 towards its forward end 10. The arm and stay thus assume the positions, when installed on a caravan, as illustrated in Fig. 3. It will be appreciated that the arm and stay can be specifically designed for a particular vehicle and this need not be telescopic.

In contradistinction to the construction described in our said earlier patent, the rearward end of the deflector forms a skirt 11 adapted to fit over the front part of the roof and upper portion of the sidewalls of the caravan, the periphery of these portions of the skirt having a peripheral, tension resisting strap formation which may be webbing 12 secured thereto and conveniently composed of substantially inextensible tension resisting webbing or other suitable straps or ropes. Alternatively, where the flexible sheet material from which the deflector is made is reinforced and sufficiently strong, the strap formation may simply be defined by a doubled over seam in the material, or simply by the material itself. Where webbing is used it is stitched to the flexible sheet material of the skirt which, at the top of the deflector, and is folded over the Tee-bar to form a flap extension 13 on the inside of the deflector. The free edge of the flap extension is provided with three equally spaced buckles 14 secured thereto, the purpose of which will be described below. Alternative fastening means such as rope and eyelets can also be used or beaded seams fitting into slotted tubes in the manner described in more detail below in relation to the Tee-Bar.

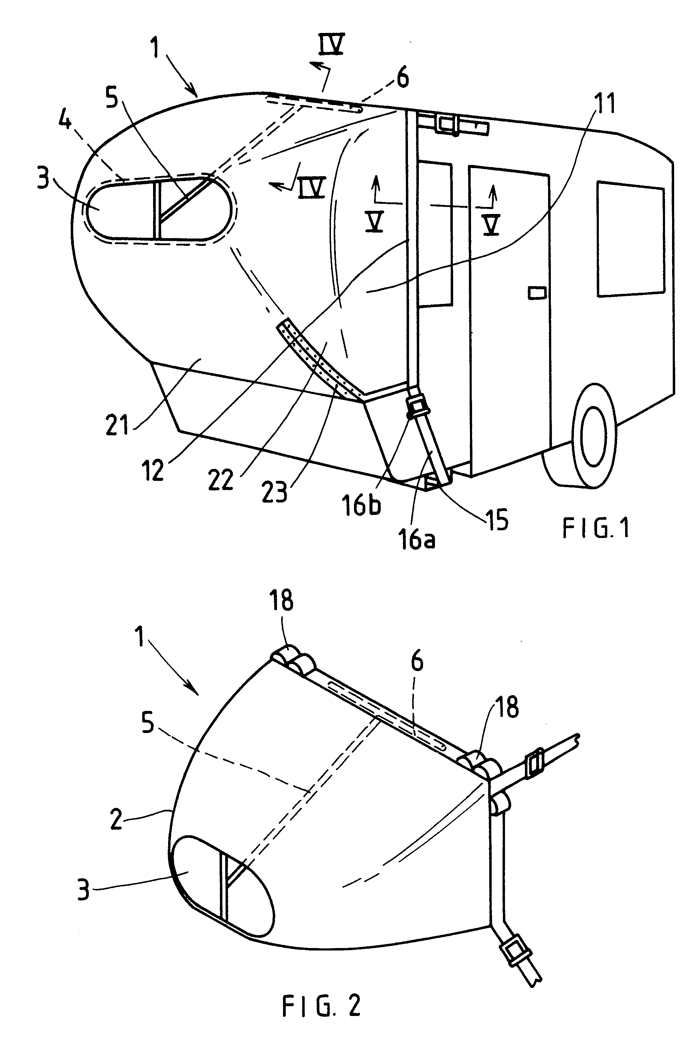

Accordingly, the peripheral edge of the skirt which is rearmost can be firmly strapped onto a caravan end wall as shown clearly in Figs. 1 and 3 and, in order to properly locate same, any webbing defining the strap formation is, where necessary, extended downwardly beyond the ends of the sidewall portions of the skirt to be fixed around a bracket 15 projecting out from the underside of the floor of the caravan. Where no webbing is employed for the strap formation short lengths thereof are stitched to the effective strap formation to form the tension strap 16a. A hand operated ratchet 16b is provided for properly tightening this strap formation. This tightening can also be achieved by the use of rubber stops or a toggle-type buckle mechanism.

In order to ensure that the upper corners of the deflector are located on the roof, or region where the roof and endwall join, and do not slip off when the strap formation is tightened, anchor straps 17 are provided which are threaded through loops 18 formed by additional webbing or other suitable material on the upper corner regions of the strap formation where the roof section of the skirt meets the sidewall sections thereof. These anchor straps 17 co-operate with brackets 19 secured to the upper sidewalls 20 or roof of the caravan.

It will be understood that a deflector made as above described may receive various different shapes and sizes of caravan end walls therein. However, in order to ensure that the deflector can be properly fitted, it is preferred that a bottom panel 21 to the deflector be releasably attached to the adjacent sidewall sections 22 thereof so that part of the bottom panel 21 can be flipped upwardly and inwardly against the front wall 9 of the caravan to any required extent.

The releasable interconnection of the co-operating edges of the bottom panel and sidewall sections of the deflector can conveniently be provided with loop and pile type fastener as indicated by numeral 23. It is to be understood that "loop and pile" type fastener means a fastener whereof one part comprises a mat of loops whereas the other co-operating part comprises a pad of upstanding hooked filaments which releasably engage in the loops of the pad as and when required. Such a fastener assembly is well known under the Trade Mark "VELCRO".

In addition reinforced eyelets are provided at corresponding spaced positions along the two co-operating edges 23 so that a wing nut and bolt assembly can be employed to fasten, very firmly, the two edges together at their rearmost point where the free end of the botton panel is flipped upwardly agaisnt the front of the caravan. The free end of the bottom panel is provided with three straps 24 whereby it can be fastened to the buckles 14 on the extension flap 13 extending downwardly from the top of the deflector. Once again it will be appreciated that alternative fastening means can be used for the purpose described.

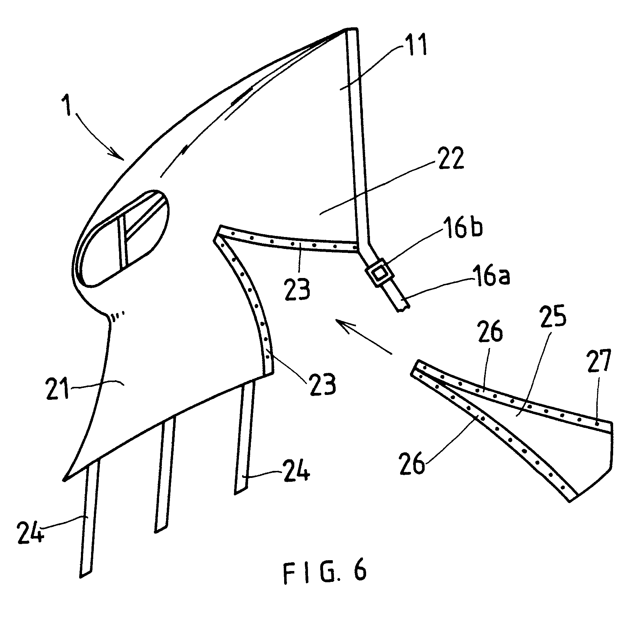

This arrangement provides a still further advantage in that, in order to accommodate still larger caravans, insert gussets 25 having co-operating loop and pile fasteners 26 extending along their edges as well as co-operating eyelets 27 can be provided for increasing the size of deflector when inserted as illustrated in Fig. 6.

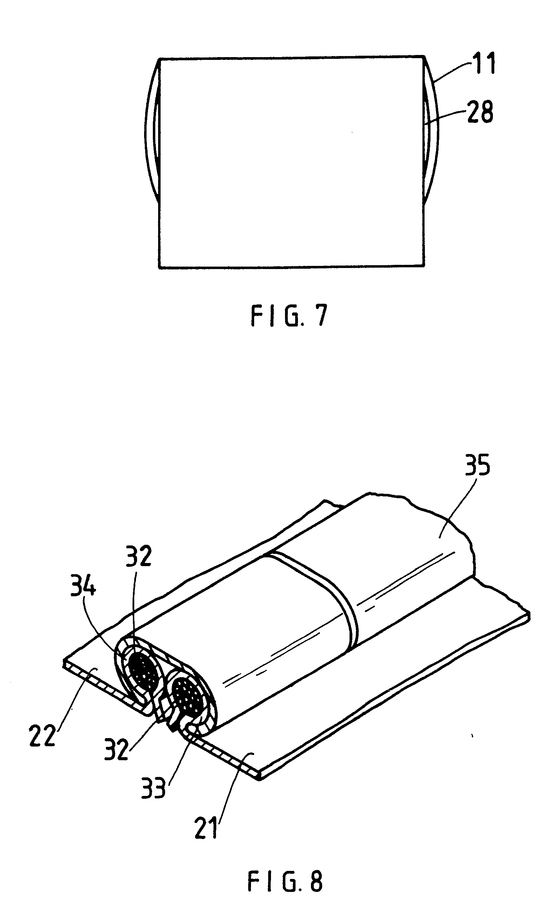

As a preferred alternative to the looped pile and/or eyelet means of connecting the edges of the bottom panel to the sidewall sections of the deflector the arragement illustrated in Fig. 8 may be employed. In this case the edges of the panel or section 21, 22 have ropes 32 stitched into an edge seam to form a composite bead 33, 34. The two beads can be held together over a required length by selecting a suitable number of slotted tubes 35 of short length which are slid axially over the two beads as shown in Fig. 8. Clearly, the number of tubes used will dictate the length of the join.

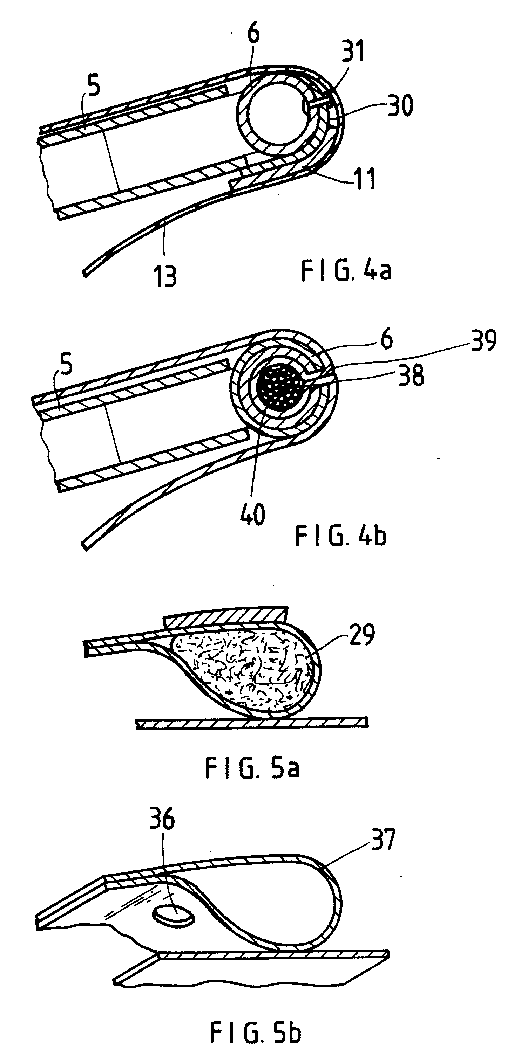

In order to ensure that only small controlled spaces 28 form between the sidewall sections of the skirt 11, and the sidewalls of the caravan itself over substantially the full height of the skirt along the sidewall, resiliently deformable padding 29 may be provided along these regions of the periphery of the skirt on the inside thereof, as shown clearly in Fig. 5a. This construction results in small openings 28 being formed as shown in Fig. 7 when the deflector is in use. Alternatively as shown in Fig. 5b, the edge could be provided with perforations 36 in the inner edge of a wide seam 37 so that the perforations are directed into the flow of air through the opening 28. The perforations thus allow the seam to become inflated thereby rendering the padding unnecessary.

Where webbing is employed to form the strap formation it is preferred that, as shown in Fig. 4a, the Tee-bar 6 is secured to the strapping 11 and this can conveniently be achieved by means of connecting short transverse straps 30 stitched to the strapping 11 and then riveted by means of rivets 31 to the Tee-bar 6.

Where no webbing is used to define the strapping formation it is preferred that rope 38 or other suitable flexible bead material be stitched into a doubled over seam 39 as shown in Fig 4b and that the composite bead 40 be slid axially into the tubular and longitudinally slotted Tee-bar 6 as shown clearly in Fig. 4b.

It will be understood that the above described deflector can easily be adjusted to fit a wide variety of different shapes and sizes of caravans irrespective of the angle of inclination of the front wall, or the general configuration thereof. The provision of a plurality of loops 18 for the anchor straps 17 provides adjustment for different widths of caravans whilst the inclination of the front wall is accommodated by the releasable arrangement of the bottom panel 21. Also different sizes can be accommodated by using different shaped gusset panels 25 as may be required.

It will also be understood that numerous variations may be made to the construction of the invention and, in particular, to the means for holding the air inlet frame in a forwardly extended position. This means may be any of those described in our earlier patent or, any other alternative means. Also, the arrangement of strapping could be varied widely as could the resilient padding 29.

It is to be noted that the above described air deflector does not have a rear wall to close it, in a nature of a bag, and it is for this reason that the spaces 28 which form between the side sections of the strapping and the sidewall of the caravan should be controlled as described above. It has been found that the air layer escaping between the sidewall and sidewall sections of the skirt above described assists materially in promoting laminar flow over the sidewalls of the caravan. This is particularly effective in cross-wind conditions. However, it is also in the scope of this invention to provide a rear wall section to the air deflector, if required, and in such a case adjustability of the rear wall could be achieved by any of the above described means.

The invention therefore provides extremely useful and practical improvements over and above the embodiments described in our earlier patent.

## Claims

1. A self-inflating type of air deflector (1) comprising a deflector member (2) made of flexible, substantially air impervious sheet material shaped to provide, in the operative condition, a forwardly located air inlet (3) communicating, through a subtantially dome-shaped region, with a skirt portion (11) operatively rearwardly located, and means (4, 5, 6, 7) for holding the air inlet (3) forwardly of the front (9) of a vehicle, in use; the deflector being characterised in that an operatively rear part of said skirt portion is adapted to be located over a part of the roof and sidewalls of a vehicle to which the deflector is fitted, said part of the skirt region having an optionally integral, peripheral, tension resisting strap formation (12, 16a, 17) for holding said part of the skirt in position on a roof and sidewall section of a vehicle.

2. An air deflector as claimed in claim 1 in which the peripheral region of said part of the skirt portion has a plurality of anchor loops (18) or straps for securing said skirt portion to a vehicle at the opposite lateral extremities of the roof or upper sidewalls of the vehicle.

3. An air deflector as claimed in either of claims 1 or 2 in which the strap formation extends down the entire part of the skirt portion adapted to co-operate with the sidewalls of a vehicle and terminates in a tension strap (16a) for securing to a bracket (15) in a lower region of a vehicle.

4. An air deflector as claimed in any one of claims 1 to 3 in which a bottom panel (21) forms the bottom part of the deflector the edges (23) of such bottom panel being releasably attached to co-operating edges of adjacent sidewall sections of the deflector.

5. An air deflector as claimed in any one of claims 1 to 4 in which removable gussets (25) are provided for insertion between the edges of the bottom panel and co-operating sidewall sections of the deflector.

6. An air deflector as claimed in either of claims 4 or 5 in which the removable attachment of the bottom panel to sidewall sections or gusset of the deflector is achieved through the medium of "loop and pile" type of fasteners in conjunction with a series of spaced co-operating eyelets for receiving a bolt and wing nut or like rigid fastener.

7. An air deflector claimed in either of claims 4 or 5 in which removable attachment of the bottom panel to the sidewall sections or gusset is achieved by means of rope (32) or other flexible bead material enclosed in a doubled over seam (33) along each edge to be joined and a plurality of slotted tubes (35) hold the resultant composite beads (34) together.

8. An air deflector as claimed in any one of claims 1 to 7 in which the flexible sheet material from which the deflector is made extends beyond the strap formation in the region adapted to co-operate with the roof of a vehicle to form an extension flap (13) which has a plurality of straps (24) or buckles for securing it to the corresponding end of a bottom panel (21) with such end edge region and extension flap located substantially on the front face (9) of the vehicle.

9. An air deflector as claimed in any one of the preceding claims in which side edges of the deflector have a doubled over seam (37) either filled with padding (29) or perforated (36) to ensure inflation thereof in use.

FIG.1

FIG. 2

FIG. 3

FIG. 4a

FIG. 4b

FIG. 5a

FIG. 5b

FIG. 6

FIG. 7

FIG. 8